(19) Europäisches Patentamt
European Patent Office
Office européen des brevets

(11)  **EP 1 677 385 B1**

(12)  **FASCICULE DE BREVET EUROPEEN**

(45) Date de publication et mention de la délivrance du brevet:
**20.02.2013 Bulletin 2013/08**

(51) Int Cl.:
**H01Q 3/46** (2006.01)      **H01Q 3/22** (2006.01)
**H01Q 19/195** (2006.01)   **G01S 13/90** (2006.01)

(21) Numéro de dépôt: **05112055.8**

(22) Date de dépôt: **13.12.2005**

(54) **Antenne à balayage électronique large bande**

Elektronisch gesteuerte breitbandige Antenne

Electronically scanned wideband antenna

(84) Etats contractants désignés:
**DE ES GB IT SE**

(30) Priorité: **15.12.2004 FR 0413343**

(43) Date de publication de la demande:
**05.07.2006 Bulletin 2006/27**

(73) Titulaire: **THALES**
**92200 Neuilly sur Seine (FR)**

(72) Inventeur: **Chekroun, Claude**
**91190 Gif sur Yvette (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**DE-A1- 19 845 870      US-A- 4 599 623**
**US-A1- 2004 164 915**

- **MASAHARU FUJITA: "AN ACTIVE REFLECTOR FOR SAR CALIBRATION HAVING A FREQUENCY SHIFT CAPABILITY" IEICE TRANSACTIONS ON COMMUNICATIONS, INSTITUTE OF ELECTRONICS INFORMATION AND COMM. ENG. TOKYO, JP, vol. E75 - B, no. 8, 1 août 1992 (1992-08-01), pages 791-793, XP000316100 ISSN: 0916-8516**

Printed by Jouve, 75001 PARIS (FR)

**EP 1 677 385 B1**

**Description**

La présente invention concerne une antenne à balayage électronique fonctionnant sur une large bande de fréquence. Elle s'applique notamment pour des applications nécessitant des antennes compactes ou à faible coût.

Une antenne à balayage électronique comporte un réseau de sources hyperfréquence associées chacune à un déphaseur. Il est connu que la direction du faisceau d'antenne est fonction des déphasages appliqués par les déphaseurs aux signaux des sources. Pour un état des déphaseur donné et une fréquence donnée, on obtient une direction de faisceau d'antenne bien définie. Cependant, pour ce même état des déphaseurs, lorsque la fréquence d'émission varie il se produit un dépointage du faisceau d'antenne. Il existe de nombreuses applications qui nécessite d'émettre instantanément une bande de fréquences plus ou moins large. C'est le cas notamment des applications d'imagerie radar de type SAR (selon l'expression anglo-saxonne Synthetique Aperture Radar). De telles applications fonctionnent par exemple sur des bandes instantanées de l'ordre de plusieurs centaines de mégahertz, voire plus. L'emploi d'antennes a balayage électronique classique provoque eu égard aux variations de fréquence une dispersion du pointage du faisceau d'antenne à la manière d'un arrosage, ce qui empêche en particulier d'obtenir des images précises.

Ces dépointages dus aux variations de fréquence ne peuvent pas être compensés au niveau de la commande des déphaseurs car leur déphasage maximum est limité à 360°. Une solution connue pour compenser ces dépointages consiste alors à utiliser des lignes à retard véritables. Cependant une telle solution complique notablement la structure des antennes, elle augmente leur poids et aussi leur coût.

Une demande de brevet US 2004/0164915 A1 divulgue une compensation du dépointage d'un faisceau d'antenne en jouant sur la variation de fréquence de l'onde traversant le guide à fentes.

Un but de l'invention est notamment de permettre la réalisation d'une antenne à balayage électronique limitant les effets de dépointages dus aux variations de fréquence sans complexification de la structure d'antenne. A cet effet, l'invention a pour objet une antenne à balayage électronique comportant au moins :

- un panneau réflecteur comportant un réseau de cellules de déphasages,
- un guide d'ondes à fentes illuminant le panneau réflecteur par une onde hyperfréquence ayant une fréquence variable f,

la déviation $\Delta\theta_f$ de la direction de l'onde émise par le guide à fentes, fonction de la variation de fréquence, s'opposant à la variation $\Delta\theta_p$ de la direction de pointage de l'onde réfléchie par le panneau réflecteur.

De préférence, le sens de parcours de l'onde hyperfréquence dans le guide dépend du sens du pointage $\theta_p$ de l'onde réfléchie par le panneau.

A cet effet, l'antenne comporte par exemple un commutateur ayant au moins une entrée et deux sorties, une première sortie étant reliée par une ligne hyperfréquence à une entrée du guide à fentes et une deuxième sortie étant reliée par une ligne hyperfréquence à l'autre entrée du guide, le commutateur recevant en entrée l'onde hyperfréquence et commutant son entrée sur l'une des deux sorties en fonction du sens de pointage $\theta_p$.

Avantageusement, le guide à fentes est placé au niveau du panneau réflecteur de sorte que les fentes soient disposées dans le plan du réseau des cellules de déphasage, l'onde émise par le guide étant réfléchie par un réseau de fils conducteurs vers le panneau réflecteur.

Un deuxième guide à fentes est par exemple disposé à côté du guide à fentes pour former deux faisceaux d'une antenne monopulses.

Avantageusement, le guide à fentes est par exemple ondulé.

L'invention a pour principaux avantages qu'elle permet de réaliser une antenne de faible encombrement, qu'elle peut être utilisée dans de nombreuses applications et qu'elle est économique.

D'autres caractéristiques et avantages de l'invention apparaîtront à l'aide de la description qui suit faite en regard de dessins annexés qui représentent :

- la figure 1, une illustration du principe de fonctionnement d'une antenne à balayage électronique,
- la figure 2, une illustration de l'angle de pointage d'un lobe d'antenne en fonction de la fréquence,
- la figure 3, un schéma d'une antenne à balayage électronique pouvant être utilisée dans un radar de type SAR,
- la figure 4, par une vue en coupe simplifiée, un exemple de réalisation d'une antenne selon l'invention,
- la figure 5, un exemple de guide à fentes utilisé dans une antenne selon l'invention,
- les figures 6a et 6b, respectivement une illustration en fonction de la fréquence de la déviation d'une onde émise par un guide à fentes et du dépointage du faisceau d'une antenne à balayage électronique,
- la figure 7, un mode de réalisation possible permettant d'inverser le sens de parcours d'une onde hyperfréquence dans un guide à fentes.

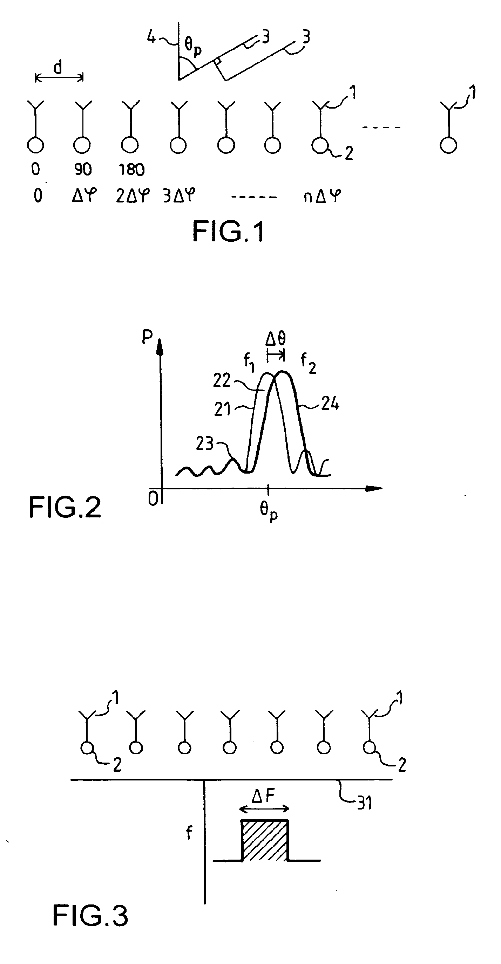

La figure 1 rappelle le principe de fonctionnement d'une antenne à balayage électronique. L'antenne comporte un réseau de sources hyperfréquence 1 ou éléments rayonnant. Chaque élément 1 est relié à un déphaseur 2. A l'émission, les signaux hyperfréquence destinés à être émis par les sources sont d'abord déphasés par les déphaseurs 2 selon une loi bien établie qui définie la direction de pointage 3 du faisceau d'antenne. Cette direction 3 est définie par un angle de pointage $\theta_p$ par rapport à l'axe 4 de l'antenne, direction 4 perpendiculaire au plan de l'antenne. Le réseau représenté par la figure 1 est linéaire, mais il représente aussi un réseau plan où chaque source représente en fait un élément d'une ligne du réseau où toutes les sources de cette ligne ont le même déphasage.

On peut ainsi appliquer sur la première ligne, représenté par la première source du réseau de la figure 1 un déphasage nul ou un déphasage de référence. Puis la phase est incrémentée d'un déphasage $\Delta\varphi$ d'une source à la suivante, ou d'une ligne à la suivante. Ainsi dans l'exemple de la figure 1, la première source a un déphasage nul, la deuxième source à un déphasage de $\Delta\varphi$, la troisième source a un déphasage de $2\Delta\varphi$, et ainsi de suite jusqu'à la $n^{\text{ième}}$ source qui a un déphase de $(n - 1)\Delta\varphi$. La direction du faisceau d'antenne ou plus particulièrement l'angle de pointage $\theta_p$ du faisceau est défini par la relation suivante :

$$\frac{2\pi d \sin\theta_p}{\lambda} = \Delta\varphi \qquad\qquad (1)$$

où d représente le pas ou distance entre deux sources 1 et $\lambda$ la longueur d'onde du signal émis.
A titre d'exemple si $d = \lambda/2$ et $\Delta\varphi = \pi/2$ alors $\theta_p = \pi/6$.
La figure 2 illustre le lobe de l'antenne de la figure 1 pour un angle de pointage $\theta_p$ tel que défini par la relation (1) pour une première fréquence d'antenne $f_1$, cette fréquence étant celle d'un signal à l'émission ou à la réception. Dans ce cas, dans la relation (1) il faut prendre $\lambda = \lambda_1 = c/f_1$, c étant la vitesse de la lumière.
Ce lobe d'antenne est représenté par une première courbe 21 centrée sur l'angle $\theta_p$ dans un système d'axes où les ordonnées représentent la puissance hyperfréquence et où les abscisses représentent les angles par rapport à l'axe 4 de l'antenne, ce dernier correspondant à l'angle 0. La courbe 21 illustre un lobe d'antenne classique, avec son lobe principal 22 flanqué de ses lobes secondaires 23.
De la relation (1) elle-même on en déduit qu'une variation de fréquence, donc de longueur d'onde $\lambda$ provoque une variation de l'angle de pointage $\theta_p$. En effet, pour un état constant d'antenne $\Delta\varphi$ est constant. Il s'ensuit que le premier terme de la relation (1) est constant et donc que son différentiel est nul, ce qui se traduit par :

$$-\frac{\Delta\lambda}{\lambda} + \frac{\Delta(\sin\theta_p)}{\sin\theta_p} = 0 \qquad\qquad (2)$$

d'où se déduit la variation de dépointage $\Delta\theta_p$ en fonction de la variation de fréquence $\Delta f$, approximativement par la relation suivante :

$$\Delta\theta_p = -tg\theta_p . \frac{\Delta f}{f} \qquad\qquad (3)$$

A titre d'exemple, si l'angle de pointage nominal est égal à $\pi/4$, il s'ensuit que :

$$\Delta\theta_p = -\frac{\Delta f}{f} \qquad\qquad (4)$$

Le figure 2 illustre par une deuxième courbe 24 le lobe d'antenne pour une deuxième fréquence d'antenne $f_2$. Les deux lobes 21, 24, l'un à la fréquence $f_1$, l'autre à la fréquence $f_2$ sont décalés de $\Delta\theta_p$. On voit alors que des variations de fréquence à l'intérieur d'une bande de fréquences donnée vont provoquer une dispersion du pointage du faisceau d'antenne. Celui-ci perd de sa directivité et l'émission ou la réception d'antenne se fait alors à la manière d'un arrosage.

La figure 3 illustre par un schéma simplifié une antenne à balayage électronique qui peut par exemple être utilisée pour une application du type SAR. A l'exemple de l'antenne de la figure 1, cette antenne comporte un réseau d'éléments rayonnant 1 commandés par des déphaseurs 2. Un signal hyperfréquence à la fréquence f alimente les éléments rayonnant 1 via les déphaseurs 2 par l'intermédiaire d'un circuit de distribution 31. La fréquence f parcourt une bande de fréquence ΔF dont la largeur est par exemple de l'ordre de 1 GHz. Avec une largeur de bande de cet ordre, un radar de type SAR peut délivrer des images synthétiques ayant une résolution d'environ 20 cm. Les variations de fréquence à l'intérieur de cette bande ΔF provoquent une dispersion du pointage d'antenne comme illustré par la figure 2. L'antenne n'est plus directive mais dispersive. Le dépointage maximum $\theta_{pMax}$ provoqué par une variation de fréquence égale à cette largeur de bande ΔF est donnée par la relation suivante :

$$\Delta F = \frac{360}{(\sin\theta_{pMax})xL} \tag{5}$$

où ΔF est en mégahertz (MHz) et L en mètres (m). A titre d'exemple si :
Δ F = 1000 et L = 1, il vient $\sin(\theta_{pMax})$ = 0,36, soit $\theta_{pMax}$ = 21°.

Il a été indiqué précédemment que pour compenser ce dépointage des solutions connues font appel à des lignes à retard. Il s'agit de véritables lignes à retards qui sont utilisées et non de simples déphaseurs. Cependant ces lignes à retards induisent des pertes. Il faut donc en plus compenser ces pertes par des amplificateurs. En final, la structure d'antenne est plus complexe, plus volumineuse et plus coûteuse.

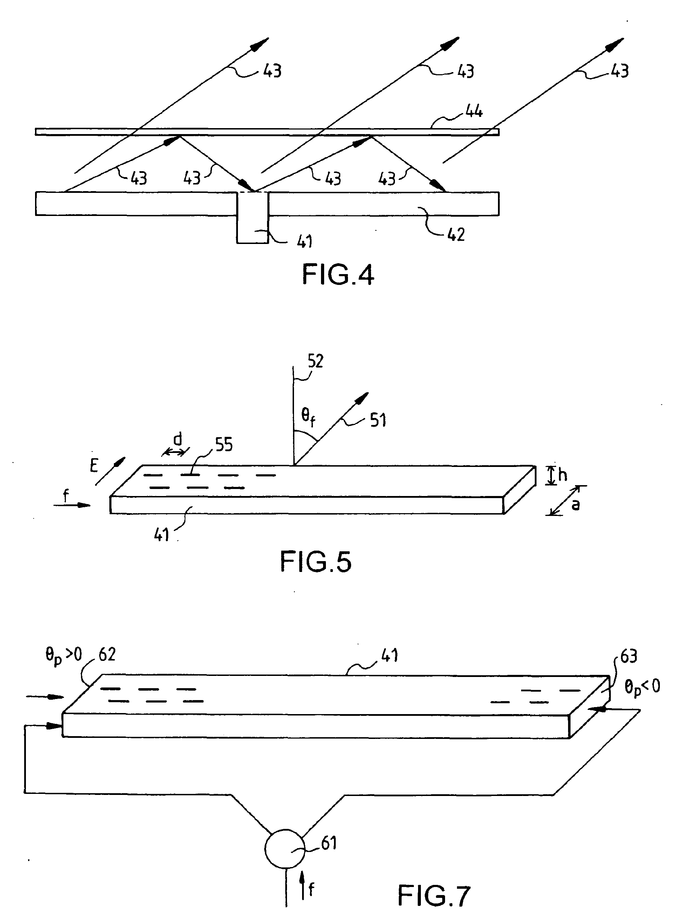

La figure 4 présente par une vue en coupe un exemple de réalisation d'une antenne selon l'invention. Cette antenne utilise un panneau réflecteur à cellules de déphasages utilisé notamment dans des antennes de type « reflect array » ou « transmit array ».

L'antenne comporte au moins un guide d'onde hyperfréquence à fentes 41 et un panneau réflecteur hyperfréquence 42, le guide à fente 41 ayant fonction d'illuminateur. Le panneau réflecteur 42 encore appelé « reflect array » dans la littérature anglo-saxonne est un réseau de déphaseurs commandables électroniquement. Un exemple de panneau réflecteur est notamment présenté dans la demande de brevet français publiée sous le numéro 2 786 610. Des exemples de panneaux réflecteurs hyperfréquence ou « reflect array » sont encore décrits dans les demandes de brevets français publiées sous les numéros 2 789 521, 2 801 729 et 2 812 457. Une source primaire illumine le réseau réflecteur. Elle émet des ondes hyperfréquence vers le panneau réflecteur. Ce panneau comporte un réseau de cellules élémentaires réalisant la réflexion et le déphasage des ondes qu'elles reçoivent. Par commande des déphasages imprimés à l'onde reçue par chaque cellule, il est possible ainsi qu'il est connu, de former un faisceau hyperfréquence dans une direction souhaitée. Le principe de commande du faisceau d'antenne est le même que dans les exemples décrits aux figures 1 et 3 sauf qu'un signal hyperfréquence est déphasé au moment de sa réflexion sur le panneau.

Le guide à fentes 41 est alimenté par une onde hyperfréquence en mode progressif. Il rayonne une onde hyperfréquence 43 vers le panneau réflecteur 42. Dans le mode de réalisation particulier de la figure 4, les fentes du guide 41 sont dans le plan du panneau réflecteur 42. Les ondes 43 émises par les fentes sont alors réfléchies par exemple par un panneau 44 à fils conducteurs vers le panneau 42. Les ondes 43 sont ensuite réfléchies par le panneau avec des déphasages comme décrit précédemment avant de traverser le réseau de fils 44. La structure d'un tel panneau est connu sous le terme anglo-saxon « transmit array ».

Une telle antenne selon l'invention permet de compenser les dépointages de faisceau d'antenne dus aux variations de fréquence sans utiliser notamment des lignes à retard. Elle présente donc une structure qui n'est pas complexe. Avantageusement, selon l'invention le défaut de dispersion d'une antenne à balayage électronique est compensé par un autre défaut. Ce défaut est un défaut d'un guide à fentes en tant qu'illuminateur.

La figure 5 présente un exemple de guide à fentes 41 qui peut être utilisé dans une antenne selon l'invention pour illuminer le panneau réflecteur 42. Le guide à fentes 41 a une largeur a et une hauteur h. Les fentes 55 sont disposées sur un des côtés de largeur a. Le pas entre les centres de deux fentes successives est égal à d. Le guide est alimenté par une onde de fréquence f en mode progressif. La composante électrique E du champ électromagnétique est parallèle au côté de largeur a.

L'exemple de guide de la figure 5 est un guide plat, c'est-à-dire que h est inférieur à a. La fréquence de coupure du guide est égale à $f_c$ = c/$\lambda_c$ et $\lambda_c$ = 2a.

Un guide à fentes comporte un défaut qui est illustré par la figure 5. En effet, la direction 51 de l'onde hyperfréquence émise par les fentes 55 n'est pas perpendiculaire au plan des fentes mais fait un angle $\theta_f$ par rapport à l'axe 52 du guide, cet axe étant perpendiculaire au plan des fentes 55. Par ailleurs, cet angle varie avec la fréquence f de l'onde hyperfréquence selon la relation suivante :

$$\sin \theta_f = \sqrt{1 - \left(\frac{\lambda}{\lambda_c}\right)} - \frac{\lambda}{2d} \qquad (6)$$

où $\lambda = c/f$.

La relation (6) montre que $\sin(\theta_f)$ décroît lorsque $\lambda$ croît. En d'autres termes l'angle $\theta_f$ croît avec la fréquence f alimentant le guide à fentes 41.

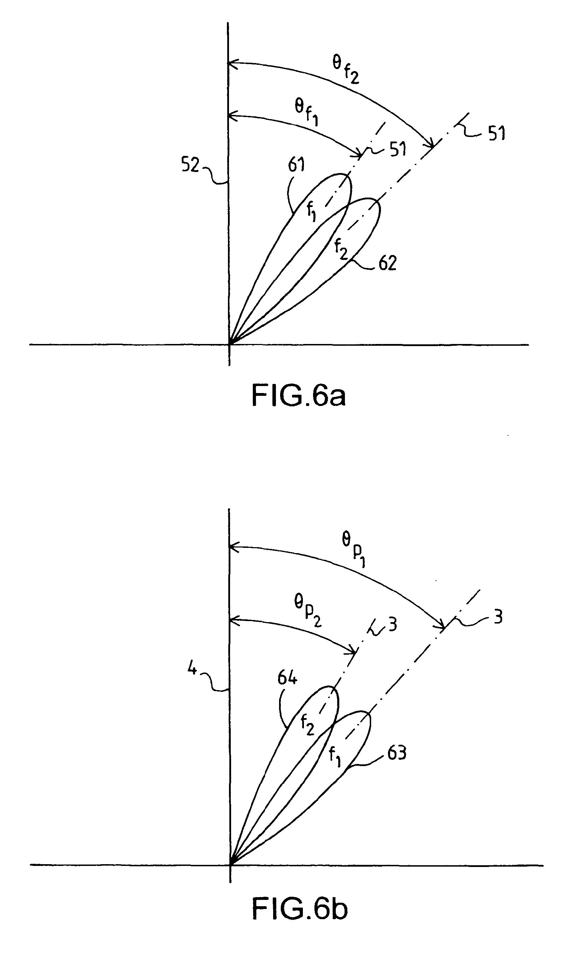

La figure 6a illustre deux faisceaux d'émission 61, 62 pour deux ondes émises par les guides à fentes, l'une à la fréquence $f_1$ et l'autre à la fréquence $f_2$, $f_2$ étant supérieure à $f_1$. Le premier faisceau 61 correspondant à la première fréquence $f_1$ fait un angle $\theta_{f1}$ par rapport à l'axe 52 du guide à fentes. Le deuxième faisceau 62 correspondant à la deuxième fréquence $f_2$ fait un angle $\theta_{f2}$ par rapport à ce même axe 52. L'angle $\theta_{f2}$ est supérieur à l'angle $\theta_{f1}$.

La figure 6b illustre le dépointage d'un faisceau d'antenne par rapport à un axe de référence 4, dépointage dû à la variation de fréquence. Ce dépointage peut concerner une antenne telle qu'illustrée schématiquement par les figures 1 et 3. Il concerne aussi, et pour les mêmes raisons physiques, un panneau réflecteur du type de celui 42 utilisé dans une antenne selon l'invention. La figure 6b présente deux faisceaux 63, 64, pour les deux fréquences $f_1$, $f_2$ ci-dessous. Le premier faisceau 63 correspondant à la première fréquence $f_1$ fait un angle $\theta_{p1}$ par rapport à l'axe 4 de référence. Le deuxième faisceau 64 correspondant à la deuxième fréquence $f_2$ fait un angle $\theta_{p2}$ par rapport à ce même axe 4. Dans ce cas, et conformément à la relation (4) notamment, l'angle de pointage du faisceau diminue lorsque la fréquence croît. Pour une même variation de la fréquence f, l'angle de pointage $\theta_p$ du panneau réflecteur 42 varie donc de façon opposée à l'angle $\theta_f$ de déviation du guide à fentes 41. Ainsi, la figure 6b montre que l'angle $\theta_{p2}$ est inférieur à l'angle $\theta_{p1}$. Il est possible de jouer sur des paramètres du guide, en particulier le pas d entre les fentes et sa largeur a, de façon à ce que pour une même variation de fréquence f, la déviation $\Delta\theta_f$ de la direction 51 de l'onde émise par le guide compense le plus possible la variation de pointage $\Delta\theta_p$ de l'onde réfléchie par panneau réflecteur 42. En particulier l'idéal serait de définir les paramètres du guide à fentes 41 pour que $\Delta\theta_f = -\Delta\theta_p$.

Même si cela n'est pas possible en pratique, il est possible de compenser en partie le dépointage $\Delta\theta_p$, au moins pour en réduire avantageusement ses effets.

La figure 7 présente seulement la partie illuminateur d'une antenne selon l'invention dans un mode de réalisation qui prend en compte le sens du dépointage. Le sens du dépointage est positif lorsque $\theta_p$ est positif et le sens de dépointage est négatif lorsque $\theta_p$ est négatif. Lorsque le sens de dépointage change de sens il n'en est pas de même pour la déviation $\Delta\theta_f$. Pour compenser la variation de pointage $\Delta\theta_p$ il faut donc faire aussi changer le sens de la déviation $\Delta\theta_f$. Pour cela il faut jouer sur le sens du signal hyperfréquence à l'intérieur du guide car le sens de la déviation dépend du sens de parcours du signal hyperfréquence dans le guide.

A cet effet, une antenne selon l'invention peut comporter un commutateur, par exemple électromécanique 61. Ce commutateur 61 comporte une entrée qui reçoit l'onde à la fréquence f. Il comporte par ailleurs deux sorties. Une première sortie est reliée par une ligne hyperfréquence à une entrée 62 du guide à fente 41 et une deuxième sortie est reliée par une ligne hyperfréquence à l'autre entrée 63 du guide à fentes. Le commutateur commute le signal d'entrée d'une sortie à l'autre en fonction du sens du dépointage $\theta_p$. Ainsi lorsque l'angle de dépointage $\theta_p$ est positif, le signal hyperfréquence pénètre dans une entrée 62 et lorsque l'angle de dépointage $\theta_p$ est négatif, le signal hyperfréquence pénètre dans l'autre entrée 63. Le commutateur 61 est par exemple commandé par une unité de contrôle qui commande aussi le déphasage des cellules du panneau réflecteur 42. En particulier cette unité de contrôle, qui commande l'angle de pointage $\theta_p$, connaît de fait son signe et peut donc commander la commutation du commutateur 61 en conséquence.

Ayant décrit le fonctionnement d'une antenne selon l'invention, on revient à l'exemple de réalisation particulier de la figure 4. Dans ce mode de réalisation du type « transmit array », l'illuminateur, constitué du guide à fentes 41, est donc placé au niveau du panneau réflecteur 42. Plus particulièrement, les sorties des fentes du guide sont dans le plan du réseau des cellules de déphasages du panneau réflecteur. Dans ce mode de réalisation, le guide à fentes 41 illumine le panneau réflecteur par réflexion sur un réseau de fils conducteurs 44. Le réseau de fils est placé en regard du panneau réflecteur 42 et parallèlement à celui-ci. Le réseau de fils est par exemple placé à une distance de quelques centimètres du panneau réflecteur. L'onde 43 émise par les fentes est réfléchie par le réseau de fils puis elle se réfléchit de nouveau sur le panneau réflecteur 42 dans une direction dépendant des déphasages appliqués par les cellules. La variation de pointage $\Delta\theta_p$ créée par les variations de la fréquence f de l'onde 43 est compensé en partie par la déviation $\Delta\theta_f$ de cette même onde 43 en sortie du guide à fentes. Après réflexion sur le panneau réflecteur 42 l'onde traverse le réseau de fils 44. La direction du faisceau d'antenne ainsi créé dépend de la commande des déphaseurs, la variation de pointage fonction de la fréquence étant en partie corrigée comme indiqué précédemment. Le réseau de fils 44 est réalisé de façon à réfléchir l'onde 43 en sortie du guide à fentes et à laisser passer l'onde après réflexion sur le panneau réflecteur 42. A cet effet, les fils sont par exemple perpendiculaires au champ électrique E de l'onde 43. Lorsque celle-ci se réfléchit sur le panneau réflecteur une rotation de $\pi/2$ est appliquée à ce champ E. Il devient alors parallèle aux fils conducteur du réseau 44. L'onde réfléchie par le panneau 42 traverse alors le réseau de fils 44. Les moyens qui permettent de maintenir le réseau de fils 44 solidaire du panneau réflecteur 42 ne sont pas représentés sur la figure 4. Plusieurs modes de fixations peuvent être utilisés. Le réseau de fils étant lui-même disposé sur un panneau en matériau diélectrique, ce panneau peut être rendu solidaire du panneau réflecteur par des entretoises par exemple. Le réseau de fils est par exemple imprimé sur le panneau diélectrique dans une technologie de type circuit imprimé.

L'exemple de réalisation de la figure 4 est de type « transmit array ». Ce mode de réalisation a notamment l'avantage d'être compact, donc peu encombrant. Il serait bien sûr possible de réaliser une antenne de type « reflect array ». Dans ce cas l'illuminateur n'est plus placé au niveau du plan réflecteur. Le guide à fentes 41 est alors placé en regard du panneau réflecteur. Outre l'aspect d'encombrement, la solution de type « reflect array » peut être moins avantageuse que la solution de type « transmit array » car dans ce mode de réalisation le guide à fentes 41 masque le panneau réflecteur à l'avant, dans le champ d'émission ou de réception de l'antenne.

Dans un mode de réalisation de type « transmit array », le guide à fentes masque une partie du réseau déphaseur ou plutôt il en supprime une partie. Une solution pour diminuer cette partie masquée est d'utiliser un guide à fentes dit « corrugué ». Un guide à fentes corrugué est un guide à fente qui possède une excroissance à l'intérieur. Son intérêt est notamment d'avoir une fréquence de coupure plus basse et donc d'avoir une largeur plus petite, ce qui diminue le masque de l'illuminateur.

Il est possible de créer une antenne de type monopulse en alignant côte à côte deux guides à fentes. Deux faisceaux d'antennes sont ainsi créés pour former une voie monopulse.

Une antenne selon l'invention permet donc d'éviter l'emploi de lignes à retard pour compenser les dépointages d'antennes dus aux variations de fréquences. Elle permet donc un mode de réalisation compact et peu coûteux. En particulier une antenne telle qu'illustrée par la figure 4 peut avoir une faible épaisseur. En bande X par exemple, l'épaisseur ne dépasse pas dix centimètres pour une dimension de 1, 5 mètre x 1, 5 mètre environ.

En raison notamment de ses performances, de son faible encombrement et de son faible coût, une antenne selon l'invention peut être utilisée pour de nombreuses applications. En particulier elle peut être utilisée sur des drônes, par exemple pour des applications d'imagerie radar de type SAR. Elle peut aussi être utilisée pour de l'imagerie radar appliquée à la surveillance, par exemple pour la surveillance des couloirs aériens dans les grands aéroports.

## Revendications

1. Antenne à balayage électronique, comportant au moins :

    - un panneau réflecteur (42) comportant un réseau de cellules de déphasages;
    - un guide d'ondes à fentes (41) illuminant le panneau réflecteur (42) par une onde hyperfréquence (43) ayant une fréquence variable f ;

    la déviation $\Delta\theta_f$ de la direction (51) de l'onde (43) émise par le guide à fentes, fonction de la variation de fréquence, s'opposant à la variation $\Delta\theta_p$ de la direction de pointage de l'onde réfléchie (43) par le panneau réflecteur (42, **caractérisée en ce que** le sens de parcours de l'onde hyperfréquence dans le guide (41) dépend du sens du pointage ($\theta_p$) de l'onde réfléchie (43) par le panneau (42),ladite antenne comportant un commutateur (61) ayant au moins une entrée et deux sorties, une première sortie étant reliée par une ligne hyperfréquence à une entrée (62) du guide à fentes (41) et une deuxième sortie étant reliée par une ligne hyperfréquence à l'autre entrée (63) du guide, le commutateur recevant en entrée l'onde hyperfréquence et commutant son entrée sur l'une des deux sorties en fonction du sens de pointage ($\theta_p$).

2. Antenne selon la revendication 1, **caractérisée en ce que** le guide (41) est placé au niveau du panneau réflecteur (42) de sorte que les fentes soient disposées dans le plan du réseau des cellules de déphasage, l'onde (43) émise par le guide étant réfléchie par un réseau de fils conducteurs (44) vers le panneau réflecteur (42).

3. Antenne selon l'une quelconque des revendications précédentes, **caractérisé en ce qu'**un deuxième guide à fentes est disposé à côté du guide à fentes (41) pour former deux faisceaux d'une antenne monopulses.

4. Antenne selon l'une quelconque des revendications précédentes, **caractérisé en ce que** le guide à fentes (41) est corrugué.

5. Antenne selon l'une quelconque des revendications précédentes, **caractérisée en ce qu'**elle est utilisée pour des applications radar d'imagerie synthétique de type SAR.

**Claims**

1. An electronically scanned antenna, comprising at least:

   - one reflector panel (42) comprising an array of phase shifting cells;
   - one slotted waveguide (41) illuminating said reflector panel (42) by an ultra-high frequency wave (43) having a variable frequency f;

   the deviation $\Delta\theta_f$ of the direction (51) of the wave (43) emitted by the slotted waveguide, as a function of the frequency variation, opposing the variation $\Delta\theta_p$ of the pointing direction of the wave (43) reflected by the reflector panel (42), **characterised in that** the travelling direction of the ultra-high frequency wave in the guide (41) depends on the pointing direction ($\theta_p$) of the wave (43) reflected by the panel (42), said antenna comprising a switch (61) with at least one input and two outputs, a first output being connected by an ultra-high frequency line to an input (62) of the slotted waveguide (41) and a second output being connected by an ultra-high frequency line to the other input (63) of the guide, the switch receiving the ultra-high frequency wave as input and switching its input to one of the two outputs as a function of the pointing direction ($\theta$p).

2. The antenna according to claim 1, **characterised in that** the waveguide (41) is placed on the level of the reflector panel (42) so that the slots are disposed in the plane of the array of phase shifting cells, the wave (43) emitted by the guide being reflected by an array of conductive wires (44) towards the reflector panel (42).

3. The antenna according to any one of the preceding claims, **characterised in that** a second slotted waveguide is disposed next to the slotted waveguide (41) so as to form two beams of a monopulse antenna.

4. The antenna according to any one of the preceding claims, **characterised in that** the slotted waveguide (41) is corrugated.

5. The antenna according to any one of the preceding claims, **characterised in that** it is used for synthetic imaging radar applications of the SAR type.

**Patentansprüche**

1. Antenne mit elektronischer Abtastung, die wenigstens Folgendes umfasst:

   - eine Reflektorplatte (42), die eine Anordnung von Phasenverschiebungszellen umfasst;
   - einen Schlitzwellenleiter (41), der die Ablenkplatte (42) mit einer Ultrahochfrequenzwelle (43) mit einer variablen Frequenz f beleuchtet;

   wobei die Abweichung $\Delta\theta_f$ von der Richtung (51) der von der von dem Schlitzwellenleiter emittierten Welle (43) in Abhängigkeit von der Frequenzvariation der Variation $\Delta\theta_p$ der Zeigerichtung der von der Reflektorplatte (42) reflektierten Welle (43) entgegengesetzt ist, **dadurch gekennzeichnet, dass** die Laufrichtung der Ultrahochfrequenzwelle im Leiter (41) von der Zeigerichtung ($\theta_p$) der von der Platte (42) reflektierten Welle (43) abhängig ist, wobei die Antenne einen Schalter (61) mit wenigstens einem Eingang und zwei Ausgängen umfasst, wobei ein erster Ausgang durch eine Ultrahochfrequenzleitung mit einem Eingang (62) des Schlitzleiters (41) verbunden ist und ein zweiter Ausgang durch eine Ultrahochfrequenzleitung mit dem anderen Eingang (63) des Leiters verbunden ist, wobei der Schalter am Eingang die Ultrahochfrequenzwelle empfängt und seinen Eingang auf einen von zwei Ausgängen in Abhängigkeit von der Zeigerichtung ($\theta_p$) schaltet.

2. Antenne nach Anspruch 1, **dadurch gekennzeichnet, dass** der Leiter (41) so auf der Reflektorplatte (42) platziert ist, dass die Schlitze in der Ebene der Anordnung von Phasenverschiebungszellen angeordnet sind, wobei die von dem Leiter emittierte Welle (43) von einer Anordnung von Leitungsdrähten (44) zur Reflektorplatte (42) reflektiert wird.

3. Antenne nach einem der vorherigen Ansprüche, **dadurch gekennzeichnet, dass** ein zweiter Schlitzleiter auf der Seite des Schlitzleiters (41) angeordnet ist, um zwei Strahlen einer Monopulsantenne zu bilden.

4. Antenne nach einem der vorherigen Ansprüche, **dadurch gekennzeichnet, dass** der Schlitzleiter (41) gewellt ist.

**5.** Antenne nach einem der vorherigen Ansprüche, **dadurch gekennzeichnet, dass** sie für Radaranwendungen mit synthetischer Bildgebung des SAR-Typs verwendet wird.

FIG.1

FIG.2

FIG.3

FIG.4

FIG.5

FIG.7

FIG.6a

FIG.6b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040164915 A1
- FR 2786610
- FR 2789521
- FR 2801729
- FR 2812457